# FASCICULE DE BREVET EUROPEEN

(11) **EP 3 219 873 B1**
(45) Date de publication et mention de la délivrance du brevet: **04.11.2020**
(21) Numéro de dépôt: 17160824.3
(22) Date de dépôt: 14.03.2017
(51) Int. Cl.: E04G 15/06, H02G 3/08

(54) **BOÎTE DE RÉSERVATION POUR L'INCORPORATION DE CANALISATIONS ADAPTÉE POUR ÊTRE POSITIONNÉE SUR UNE ARMATURE**
VERTEILERKASTEN ZUM EINBAU VON KANALISATIONSROHREN, DER ZUR POSITIONIERUNG AUF EINER ARMATUR GEEIGNET IST
RESERVATION BOX FOR INCORPORATING PIPELINES SUITABLE FOR BEING POSITIONED ON A FRAME

(30) Priorité: 18.03.2016 FR 1652338
(43) Date de publication de la demande: 20.09.2017
(73) Titulaire: Ain Corporation, 01390 Civrieux (FR)
(72) Inventeur: GENEVOIS, David, 01390 CIVRIEUX (FR)
(74) Mandataire: Cabinet Beau de Loménie

(56) Documents cités:
- FR-A1- 2 997 431
- JP-U- S5 872 929
- JP-U- S6 165 818
- JP-U- S59 169 525

## Description

La présente invention concerne le domaine technique de l'incorporation au sein d'une dalle béton, de canalisations faisant partie d'une installation de circulation d'un fluide telle qu'une installation de plomberie, de climatisation, de chauffage ou de gaz.

Dans le domaine ci-dessus, il est connu de faire passer des canalisations ou tubes pour la circulation d'un fluide à l'intérieur de gaines ou de fourreaux de protection qui sont disposés dans le coffrage d'une dalle avant le coulage du béton. Classiquement, ces fourreaux doivent après séchage du béton, être accessibles à partir de la face supérieure de la dalle afin de permettre leur reprise pour y introduire des tubes de circulation d'un fluide.

Pour permettre la reprise de ces fourreaux, il est connu de positionner sur le coffrage de la dalle, les fourreaux dont les extrémités sont insérées par exemple dans une boîte de réservation comme décrite par le brevet FR 2 789 711. Après le coulage et le séchage du béton, le couvercle de la boîte de réservation est retiré permettant ainsi de libérer l'extrémité des fourreaux. Il est ainsi possible de préserver la liberté des extrémités d'un fourreau incorporé dans une dalle de béton et d'assurer l'accessibilité de ces extrémités à partir de la face supérieure de la dalle. Après le passage des tubes dans les fourreaux de la dalle, du béton est coulé à l'intérieur des boîtes.

Classiquement, une dalle béton incorpore une armature comportant des tiges par exemple sous la forme d'un treillis métallique. Avantageusement, la boîte de réservation décrite par le brevet FR 2 789 711 comporte des pieds permettant son appui sur le coffrage tout en étant décalée par rapport à l'armature insérée dans le coffrage avant la coulée du béton. Cette boîte est pourvue d'un système de fixation à cette armature pour la maintenir en place notamment lors de la coulée du béton.

La demande de brevet FR 2 722 818 décrit un dispositif de réservation de gaines comportant une boîte réutilisable munie de moyens d'ancrage dans une dalle de construction. Ces moyens d'ancrage sont constitués par des pieds vissés dans le fond du récipient et munis de fers à béton destinés à être fixés à l'armature. Une telle boîte s'avère difficile en pratique, à fixer aux armatures.

Le brevet FR 2 986 549 décrit également une boîte de réservation comportant une jupe ou une aile munie de trous de passage pour un lien de fixation de la boîte sur l'armature. Cette jupe ou aile est montée articulée par rapport à la paroi de la boîte de manière à pouvoir être rabattue contre l'armature pour sa fixation. Le montage du fond et de la jupe ou de l'aile de cette boîte de réservation sur l'armature empêche que les tiges de cette armature se trouvent enrobés de béton.

La demande de brevet FR 2 997 431 décrit un boîtier de raccordement destiné à être en appui sur une armature formée de tiges. Ce boîtier se présente sous la forme d'un corps creux comportant un fond à partir duquel s'élèvent des parois latérales. Comme indiqué à la page 10, lignes 4 à 12, deux parois latérales disposées en vis-à-vis sont prolongées par des pieds discontinus s'étendant au-delà du fond. Le pied discontinu comprend plusieurs portions formant des extensions séparées les unes des autres par un espacement facilitant le coulage du béton. Dans la mesure où les espacements sont réalisés jusqu'au niveau du fond du boîtier, le fond du boîtier est en contact avec les tiges empêchant le béton de les enrober.

La demande de brevet JP S58 72929 U décrit un boîtier de raccordement sur laquelle est montée une plaque de fixation munie de gorges destinées à venir s'engager sur des tiges. Ce boîtier ne peut pas être positionné correctement et facilement sur des armatures.

Le document JP S59 169525 U décrit un boîtier de raccordement dont le fond est pourvu de colliers de fixation sur des tiges qui se trouvent en contact avec le fond du boîtier. Les tiges ne peuvent pas être enrobées de béton.

Le document JP S61 65818 U décrit un boîtier de raccordement sur le fond duquel est montée une plaque équipée de crochets de fixation sur des tiges. Ce boîtier ne peut pas être fixé correctement et facilement sur des armatures.

La présente invention vise à remédier aux inconvénients de l'art antérieur en proposant une boîte de réservation pour l'incorporation de canalisations dans une dalle béton, conçue pour être fixée correctement et facilement sur une armature tout en n'altérant pas l'enrobage de l'armature par le béton.

Pour atteindre un tel objectif, l'invention concerne une boîte de réservation selon la revendication 1, destinée à être en appui sur une armature formée de tiges, placée dans le coffrage d'une dalle de béton, pour l'incorporation de canalisations dans la dalle, cette boîte se présentant sous la forme d'un corps creux comportant un fond à partir duquel s'élève une paroi latérale pourvue d'un système de passage pour au moins un fourreau de protection d'une canalisation, cette paroi latérale délimitant à l'opposé de la face interne du fond, une ouverture destinée à être obturée par un couvercle. Selon l'invention, cette boîte comporte une paroi d'écartement s'étendant en saillie à partir de la face externe du fond, sous la forme d'une couronne continue comportant un bord d'extrémité dentelé présentant une succession de dents délimitant entre elles, des logements de blocage pour les tiges.

De plus, la boîte selon l'invention peut présenter en outre en combinaison au moins l'une et/ou l'autre des caractéristiques additionnelles suivantes :
- la paroi d'écartement s'étend sensiblement parallèlement par rapport à la paroi latérale et en retrait par rapport à ladite paroi latérale ;
- la paroi d'écartement s'étend selon une hauteur comprise entre 25 mm et 40 mm ;
- la paroi d'écartement comporte au moins une lumière de passage en tant que dispositif d'accrochage de la boîte à l'armature ;
- les logements de blocage possèdent un profil de coincement convergent en direction opposée du bord d'extrémité dentelé ;
- les logements de blocage possèdent un fond en forme d'arc de cercle dont le diamètre est compris entre 6 mm et 12 mm et de préférence entre 8 mm et 10 mm ;
- les logements de blocage possèdent une profondeur comprise entre 4 mm et 15 mm et de préférence entre 8 mm et 12 mm ;
- les logements de blocage délimitent entre eux des dents de largeur comprise entre 1 mm et 3 mm ;
- les logements de blocage sont réalisés selon un pas d'écartement régulier correspondant à un multiple du pas d'écartement de l'armature ;
- le fond de la boîte présente une forme de quadrilatère et la paroi d'écartement est une couronne en forme de quadrilatère ;
- les logements de blocage de la paroi d'écartement possèdent des fonds qui sont écartés du fond du corps creux.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective de dessous d'un exemple de réalisation d'une boîte de réservation conforme à l'invention.
La **Figure 2** est une vue en perspective de dessus d'une boîte de réservation conforme à l'invention sans couvercle, schématisée en position montée sur une armature.
La **Figure 3** est une vue de côté de la boîte illustrée à la **Fig. 2****.**
La **Figure 4** est une vue de côté montrant une autre variante de réalisation du bord d'extrémité dentelé équipant une boîte de réservation conforme à l'invention.
La **Figure 5** est une vue de côté montrant une autre variante de réalisation du bord d'extrémité dentelé équipant une boîte de réservation conforme à l'invention.

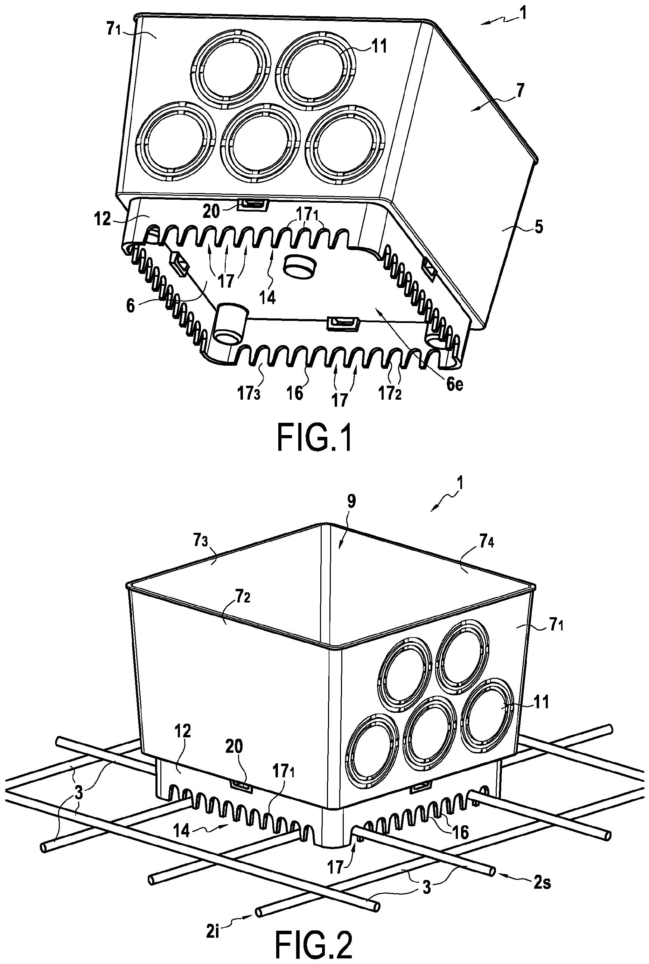

Comme cela apparaît plus précisément aux **Fig. 1** à **3**, l'objet de l'invention concerne une boîte de réservation **1** destinée à être en appui sur une armature **2** placée classiquement dans le coffrage d'une dalle de béton. Cette armature **2** est formée de tiges **3** au sens général réalisées en toutes matières appropriées et arrangées selon diverses configurations adaptées aux techniques de construction. Typiquement, les tiges **3** sont des fers faisant partie d'une armature réalisée sous la forme d'un treillis. Selon cet exemple, l'armature **2** comporte une nappe supérieure **2s** de tiges **3** et une nappe inférieure **2i** de tiges **3** fixées aux tiges de la nappe supérieure.

Cette boîte de réservation **1** se présente sous la forme d'un corps creux **5** comportant un fond **6** à partir duquel s'élève une paroi latérale **7** délimitant à l'opposé de la face interne du fond **6**, une ouverture **9** destinée à être obturée par un couvercle non représenté. Le corps creux **5** est réalisé en tous matériaux étanches au béton et peut présenter toute forme extérieure appropriée à sa fonction. Dans l'exemple préféré illustré, le corps creux **5** présente une forme sensiblement hexaédrique dont les six faces présentent chacune une forme de quadrilatère. Le fond **6** présente une forme de quadrilatère et la paroi latérale **7** comporte quatre faces **7₁** à **7₄.** Selon une variante préférée de réalisation, la paroi latérale **7** présente une forme en dépouille convergente vers le fond **6.** Ainsi, le corps **5** présente une forme tronc pyramidale convergent vers le fond **6.**

De manière classique, la paroi latérale **7** est pourvue d'un système **11** de passage pour au moins un fourreau de protection d'une canalisation non représenté. Avantageusement, une seule face par exemple **7₁** de la paroi latérale présente un système **11** pour le passage de plusieurs fourreaux de protection par exemple au nombre de cinq dans l'exemple illustré **(****Fig. 1** à **3**). Bien entendu, cette face **7₁** peut présenter un système de passage **11** pour un nombre supérieur ou inférieur de canalisations. De même, chacune des faces **7₁** à **7₄** de la paroi latérale **7** peut présenter un système de passage **11** pour un ou plusieurs fourreaux de protection de canalisations.

Le système de passage **11** est par exemple constitué pour chaque fourreau, par une région découpée, prédécoupée ou perforable aménagée dans la paroi latérale **7** pour présenter une moindre résistance à la rupture que le reste de la paroi latérale. De manière préférée mais non exclusive, cette région perforable possède une forme annulaire d'un diamètre inférieur ou égal au diamètre nominal du fourreau à incorporer de façon à permettre, après ouverture, un blocage relatif du fourreau par coincement. De même, cette région perforable peut prédéfinir plusieurs diamètres de passage pour autoriser l'usage de fourreaux de divers diamètres. Le système de passage **11** peut être réalisé de toute manière appropriée telle que par exemple par un perçage directement exécuté dans la paroi latérale **7** et obturé au moyen d'un bouchon amovible réalisé par exemple dans un matériau élastiquement déformable.

Conformément à l'invention, la boîte de réservation **1** comporte une paroi d'écartement **12** s'étendant en saillie à partir de la face externe **6e** du fond **6**, sous la forme d'une couronne ou ceinture continue présentant un bord d'extrémité dentelé **14** destiné à venir en appui sur l'armature **2**, comme cela sera expliqué en détail dans la suite de la description. Il doit être compris que le bord d'extrémité dentelé **14** s'étend à distance du fond **6** de manière que le fond **6** de la boîte ne se trouve pas en contact avec l'armature **2** en position montée de la boîte sur l'armature **2.** Typiquement, la paroi d'écartement **12** s'étend selon une hauteur prise entre le fond **6** et le bord d'extrémité dentelé **14** comprise entre 25 mm et 40 mm.

Cette paroi d'écartement **12** est réalisée avec une épaisseur adaptée par exemple de l'ordre du millimètre pour présenter une rigidité suffisante lors de l'utilisation de la boîte afin de s'étendre constamment en saillie par rapport au fond **6.** De préférence, cette paroi d'écartement **12** est réalisée dans le même matériau que la boîte. Typiquement, la boîte de réservation **1** est réalisée par les techniques de moulage.

Selon une caractéristique avantageuse de réalisation, la paroi d'écartement **12** s'étend en retrait par rapport à la paroi latérale **7.** En d'autres termes, la paroi d'écartement **12** ne s'étend pas dans le prolongement de la paroi latérale **7.** Toutefois, cette paroi d'écartement **12** qui forme une couronne, présente un contour fermé dont le périmètre est adapté pour assurer un montage stable de la boîte sur l'armature **2.** Typiquement, le périmètre de cette paroi d'écartement **12** est compris entre 85 % et 95% du périmètre du fond **6.** Avantageusement, la paroi d'écartement **12** est centrée par rapport au fond **6**.

Selon une caractéristique avantageuse de réalisation, la paroi d'écartement **12** s'étend sensiblement parallèlement par rapport à la paroi latérale **7.** Ainsi, la paroi d'écartement **12** présente un profil en forme de quadrilatère tout comme la paroi latérale **7** qui comporte également un profil en forme de quadrilatère. La paroi d'écartement **12** comporte ainsi quatre côtés s'étendant sensiblement perpendiculairement par rapport au fond **6.**

Selon une caractéristique de l'invention, le bord d'extrémité dentelé **14** comporte une succession de dents **16** délimitant entre elles, des logements **17** de blocage pour les tiges **3.** Les logements **17** sont dimensionnés et configurés pour coopérer avec les tiges **3** afin d'assurer un maintien de la boîte sur l'armature **2** dans une position fixe.

Selon une caractéristique avantageuse de réalisation de l'invention, les logements de blocage **17** possèdent un profil de coincement convergent en direction opposée du bord d'extrémité dentelé **14.** Ainsi, les logements de blocage **17** possèdent un profil partiellement complémentaire au profil des tiges **3** pour obtenir un assemblage par coincement entre la boîte de réservation **1** et les tiges **3.**

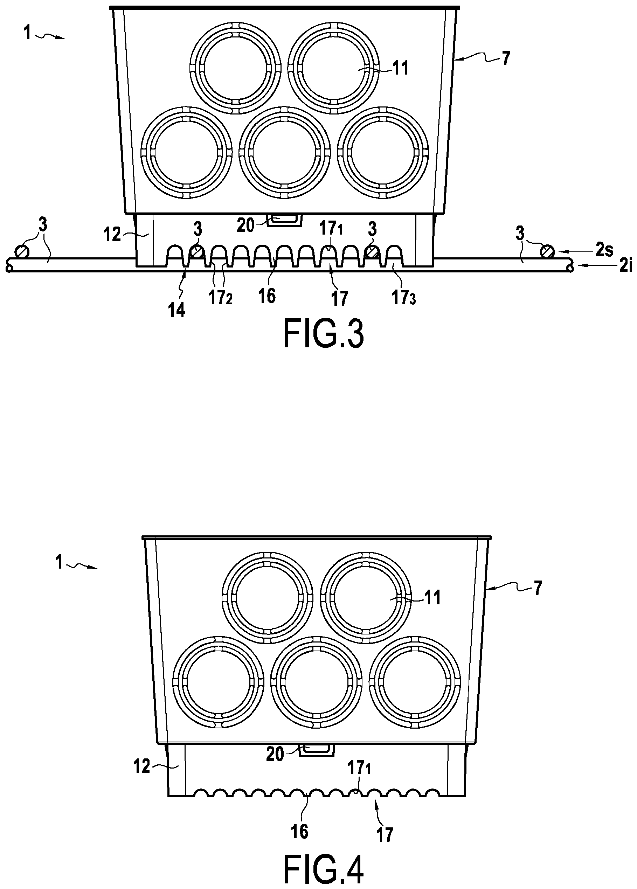

Selon les exemples de réalisation illustrés par les **Fig. 1** à **4**, les logements de blocage **17** possèdent un fond **17₁** en forme d'arc de cercle. Dans l'exemple de réalisation illustré à la **Fig. 4**, les logements de blocage **17** possèdent un profil en demi-cercle alors que dans l'exemple de réalisation illustré par les **Fig. 1** à **3**, les logements de blocage **17** possèdent un fond **17₁** en forme d'un demi-cercle se prolongeant de part et d'autre par des rampes **17₂** de profil convergent vers le fond. Chaque logement de blocage **17** présente ainsi, à l'opposé de son fond, une ouverture **17₃** s'ouvrant sur l'extérieur pour l'engagement d'une tige **3.**

Par exemple, les logements de blocage **17** possèdent un fond **17₁** en forme d'un demi-cercle dont le diamètre est compris entre 6 mm et 12 mm et de préférence entre 8 mm et 10 mm. Les logements de blocage **17** possèdent une ouverture **17₃** dont la largeur est égale à ce diamètre dans l'exemple illustrée à la **Fig. 4****.** Pour l'exemple illustré aux **Fig. 1** à **3**, la largeur de l'ouverture **17₃** prise entre les extrémités des rampes **17₂** est comprise entre 8 mm et 14 mm.

Typiquement, une boîte destinée à être montée sur une armature formée de tiges **3** avec un diamètre de 8 mm ou 10 mm possède un logement de blocage **17** avec un fond **17₁** en demi-cercle de diamètre respectivement de 8 mm et 10 mm (**Fig. 1** à **4**) et dans la variante des **Fig. 1** à **3**, avec une ouverture **17₃** dont la largeur est égale à respectivement 10 mm et 12 mm.

Ainsi, les logements de blocage **17** possèdent une profondeur comprise entre 4 mm et 15 mm et de préférence entre 8 mm et 12 mm, cette profondeur étant prise entre le fond **17₁** et l'ouverture **17₃** du logement de blocage. Il est à noter que la profondeur des logements de blocage **17** est choisie pour coopérer avec au moins les tiges **3** de la nappe supérieure **2s** mais également, pour des valeurs de profondeur plus importantes, avec les tiges **3** de la nappe inférieure **2i** comme dans l'exemple de réalisation illustré aux **Fig. 1** à **3****.**

Quelle que soit la forme de réalisation, les logements de blocage **17** possèdent des fonds **17₁** s'étendant à distance du fond **6** du corps creux **5.** Les fonds **17₁** des logements de blocage **17** sont écartés du fond afin d'obtenir une paroi d'écartement **12** s'étendant sous la forme d'une couronne continue, en saillie à partir du fond **6** du corps creux.

Selon une caractéristique avantageuse de réalisation, les logements de blocage **17** sont réalisés selon un pas d'écartement régulier correspondant à un multiple du pas d'écartement de l'armature **2.** Ainsi dans le cas où l'armature **2** est un treillis de 100x100 mm, le pas d'écartement entre deux logements de blocage **17** voisins est de 12,5 mm de sorte que deux tiges consécutives du treillis se trouvent engagées dans deux logements de blocage **17** séparés par sept logements de blocage **17.** Dans l'exemple illustré aux **Fig. 1** à **3**, la paroi d'écartement **12** comporte quatre côtés présentant chacun un bord d'extrémité dentelé **14** muni de onze logements de blocage **17.** Bien entendu, le nombre de logements de blocage **17** aménagés sur chaque côté de la paroi d'écartement **12** peut être différent. Ainsi dans l'exemple illustré à la **Fig. 4**, chaque côté de la paroi d'écartement **12** est munie de treize logements de blocage **17.** Il est clair que les logements de blocage **17** aménagés sur deux côtés opposés de la paroi d'écartement **12** sont alignés de manière que deux logements de blocage **17** alignés et aménagés sur deux côtés opposés puissent recevoir une même tige **3.**

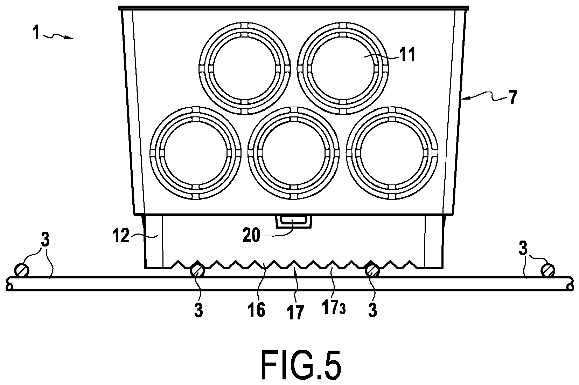

Selon les exemples de réalisation illustrés par les **Fig. 1** à **4**, les logements de blocage **17** possèdent un fond **17₁** en forme d'arc de cercle. Bien entendu, la forme des logements de blocage **17** peut être différente. La **Fig. 5** illustre un exemple de réalisation dans lequel les logements de blocage **17** présentent une forme triangulaire dont la pointe est dirigée vers le fond **6** de la boîte.

Quelle que soit la forme de réalisation des logements de blocage **17**, les logements de blocage **17** délimitent entre eux des dents **16** de largeur comprise entre 1 mm et 3 mm. De préférence, les dents **16** présentent, de par leur faible épaisseur, une capacité de déformation contribuant à l'assemblage de la boîte avec les tiges.

Selon une caractéristique avantageuse de réalisation, le corps creux **2** comporte également un dispositif **20** d'accrochage de la boîte **1** à l'armature **2** permettant de sécuriser le maintien en position de la boîte lors en particulier du coulage du béton. Le dispositif d'accrochage **20** comporte au moins une lumière de passage pour un lien ou une attache non réprésenté assurant une liaison entre d'une part l'armature **2**, et d'autre part le fond **6** et/ou la paroi latérale **7.** Avantageusement, les lumières de passage **20** sont aménagées dans la paroi d'écartement **12** et par exemple, dans chacun de ses côtés.

La boîte **1** selon l'invention présente une conception simple permettant sa fabrication à un coût réduit. Par ailleurs, sa mise en œuvre qui découle de la description qui précède est particulièrement aisée. Avant coulage du béton et après mise en place du coffrage et de l'armature **2**, la boîte **1** est disposée à l'intérieur du coffrage **C** de manière à placer en appui les logements de blocage **17** sur des tiges **3.** Le montage de la boîte sur les tiges **3** est réalisé simplement par un effort de poussée sur la boîte pour assurer l'engagement des logements de blocage **17** sur les tiges **3.** Selon une variante préférée de réalisation, la boîte **1** est immobilisée au moyen de liens d'accrochage passés dans les lumières de passage **20** et autour des armatures **2.**

Classiquement, au moins un fourreau de protection d'une canalisation est passé à l'intérieur de la boîte par le système de passage **11** aménagé dans la paroi latérale **7** de cette dernière. Après mise en place du ou des fourreaux, le couvercle de la boîte est mis en place pour assurer l'obturation de l'ouverture **9** de la boîte **1.** Le béton destiné à former la dalle est alors coulé de manière que la boîte **1** se trouve entièrement noyée dans la dalle. Après séchage du béton, le couvercle est enlevé ainsi qu'éventuellement la couche de béton superficielle recouvrant le couvercle.

Il est à noter que la présence de la boîte sur les armatures **2** n'entrave pas la possibilité que le béton enrobe les armatures. En effet, les tiges **3** de l'armature sont en contact uniquement ponctuellement avec le bord d'extrémité dentelé **14** de la paroi d'écartement **12** qui permet le maintien du fond de la boîte à distance des armatures avec la possibilité pour le béton d'occuper le volume interne délimité par la paroi d'écartement **12**.

L'invention n'est pas limitée aux exemples décrits et représentés car diverses modifications peuvent y être apportées sans sortir de son cadre.

## Revendications

1. Boîte de réservation destinée à être en appui sur une armature formée de tiges (**3**), placée dans le coffrage d'une dalle de béton, pour l'incorporation de canalisations dans la dalle, cette boîte se présentant sous la forme d'un corps creux (**5**) comportant un fond (**6**) à partir duquel s'élève une paroi latérale (**7**) pourvue d'un système (**11**) de passage pour au moins un fourreau de protection d'une canalisation, cette paroi latérale délimitant à l'opposé de la face interne du fond, une ouverture (**9**) destinée à être obturée par un couvercle, la boîte comportant une paroi d'écartement (**12**) s'étendant en saillie à partir de la face externe (**6ₑ**) du fond, et comportant un bord d'extrémité dentelé (**14**) présentant une succession de dents (**16**) délimitant entre elles, des logements de blocage (**17**) pour les tiges, la boîte étant **caractérisée en ce que** la paroi d'écartement (12) forme une couronne continue et **en ce que** le bord d'extrémité dentelé (**14**) s'étendant à distance du fond (**6**) de manière que le fond (**6**) ne se trouve pas en contact avec l'armature en position montée de la boîte sur l'armature.

2. Boîte de réservation selon la revendication 1, **caractérisée en ce que** la paroi d'écartement (**12**) s'étend sensiblement parallèlement par rapport à la paroi latérale (**7**) et en retrait par rapport à ladite paroi latérale (**7**).

3. Boîte de réservation selon les revendications 1 ou 2, **caractérisée en ce que** la paroi d'écartement (**12**) s'étend selon une hauteur comprise entre 25 mm et 40 mm.

4. Boîte de réservation selon l'une des revendications 1 à 3, **caractérisée en ce que** la paroi d'écartement (**12**) comporte au moins une lumière de passage en tant que dispositif (**20**) d'accrochage de la boîte à l'armature.

5. Boîte de réservation selon l'une des revendications 1 à 4, **caractérisée en ce que** les logements de blocage (**17**) possèdent un profil de coincement convergent en direction opposée du bord d'extrémité dentelé (**14**).

6. Boîte de réservation selon l'une des revendications 1 à 5, **caractérisée en ce que** les logements de blocage (**17**) possèdent un fond (**17₁**) en forme d'arc de cercle dont le diamètre est compris entre 6 mm et 12 mm et de préférence entre 8 mm et 10 mm.

7. Boîte de réservation selon l'une des revendications 1 à 6, **caractérisée en ce que** les logements de blocage (**17**) possèdent une profondeur comprise entre 4 mm et 15 mm et de préférence entre 8 mm et 12 mm.

8. Boîte de réservation selon l'une des revendications 1 à 7, **caractérisée en ce que** les logements de blocage (**17**) délimitent entre eux des dents (**16**) de largeur comprise entre 1 mm et 3 mm.

9. Boîte de réservation selon l'une des revendications 1 à 8, **caractérisée en ce que** les logements de blocage (**17**) sont réalisés selon un pas d'écartement régulier correspondant à un multiple du pas d'écartement de l'armature (**2**).

10. Boîte de réservation selon l'une des revendications 1 à 9, **caractérisée en ce que** le fond (**6**) de la boîte (**1**) présente une forme de quadrilatère et **en ce que** la paroi d'écartement (**12**) est une couronne en forme de quadrilatère.

11. Boîte de réservation selon l'une des revendications 1 à 10, **caractérisée en ce que** les logements de blocage (**17**) de la paroi d'écartement (**12**) possèdent des fonds (**17₁**) qui sont écartés du fond (**6**) du corps creux (**5**).

## Patentansprüche

1. Verteilerkasten, der dazu bestimmt ist, auf einer Bewehrung aufzuliegen, die aus Stangen (3) gebildet wird, und die auf der Schalung einer Betonplatte platziert wird, zur Integration von Kanalisationsleitungen in die Platte, wobei der Kasten in der Form eines Hohlkörpers (5) vorliegt, der einen Boden (6) beinhaltet, von dem aus sich eine Seitenwand (7) erhebt, die mit einem System (11) für den Durchgang zumindest eines Schutzmantelrohrs für eine Kanalisationsleitung versehen ist, wobei diese Seitenwand der Innenseite des Bodens gegenüber eine Öffnung (9) begrenzt, die dazu bestimmt ist, mit einem Deckel verschlossen zu werden, wobei der Kasten eine Beabstandungswand (12) beinhaltet, die sich von der Außenseite (6ₑ) des Bodens aus wegragend erstreckt und eine gezahnte Endkante (14) beinhaltet, die eine Abfolge von Zähnen (16) aufweist, die zwischen einander Sicherungsaufnahmen (17) für die Stangen begrenzen, wobei der Kasten **dadurch gekennzeichnet ist, dass** die Beabstandungswand (12) einen durchgehenden Kranz bildet und dass die gezahnte Endkante (14) sich mit Abstand von dem Boden (6) auf solche Weise erstreckt, dass der Boden (6) sich in der auf der Bewehrung montierten Position des Kastens nicht in Kontakt mit der Bewehrung befindet.

2. Verteilerkasten nach Anspruch 1, **dadurch gekennzeichnet, dass** die Beabstandungswand (12) sich im Wesentlichen parallel in Bezug auf die Seitenwand (7) und eingerückt in Bezug auf die Seitenwand (7) erstreckt.

3. Verteilerkasten nach den Ansprüchen 1 oder 2, **dadurch gekennzeichnet, dass** die Beabstandungswand (12) sich über eine Höhe zwischen 25 mm und 40 mm erstreckt.

4. Verteilerkasten nach einem der Ansprüche 1 bis 3, **dadurch gekennzeichnet, dass** die Beabstandungswand (12) zumindest eine Durchgangsöffnung als Vorrichtung (20) zur Verankerung des Kastens an der Bewehrung beinhaltet.

5. Verteilerkasten nach einem der Ansprüche 1 bis 4, **dadurch gekennzeichnet, dass** die Sicherungsaufnahmen (17) ein sich verjüngendes Profil besitzen, das in die der gezahnten Endkante (14) entgegengesetzten Richtung zusammenläuft.

6. Verteilerkasten nach einem der Ansprüche 1 bis 5, **dadurch gekennzeichnet, dass** die Sicherungsaufnahmen (17) einen Boden (17₁) in Kreisbogenform besitzen, dessen Durchmesser zwischen 6 mm und 12 mm und vorzugsweise zwischen 8 mm und 10 mm liegt.

7. Verteilerkasten nach einem der Ansprüche 1 bis 6, **dadurch gekennzeichnet, dass** die Sicherungsaufnahmen (17) eine Tiefe zwischen 4 mm und 15 mm und vorzugsweise zwischen 8 mm und 12 mm besitzen.

8. Verteilerkasten nach einem der Ansprüche 1 bis 7, **dadurch gekennzeichnet, dass** die Sicherungsaufnahmen (17) zwischen einander Zähne (16) mit einer Breite von zwischen 1 mm und 3 mm begrenzen.

9. Verteilerkasten nach einem der Ansprüche 1 bis 8, **dadurch gekennzeichnet, dass** die Sicherungsaufnahmen (17) gemäß einem regelmäßigen Abstandsintervall entsprechend einem Vielfachen des Abstandsintervalls der Bewehrung (2) verwirklicht sind.

10. Verteilerkasten nach einem der Ansprüche 1 bis 9, **dadurch gekennzeichnet, dass** der Boden (6) des Kastens (1) eine viereckige Form aufweist und dass die Beabstandungswand (12) ein Kranz in Form eines Vierecks ist.

11. Verteilerkasten nach einem der Ansprüche 1 bis 10, **dadurch gekennzeichnet, dass** die Sicherungsaufnahmen (17) der Beabstandungswand (12) Böden (17₁) besitzen, die von dem Boden (6) des Hohlkörpers (5) beabstandet sind.

## Claims

1. A reservation box intended to bear on a reinforcement formed of rods (3), placed in the formwork of a concrete slab, for the incorporation of pipes into the slab, this box being in the form of a hollow body (5) including a bottom (6) from which rises a side wall (7) provided with a passage system (11) for at least one sheath for protecting a pipe, this side wall delimiting opposite the inner face of the bottom, an aperture (9) intended to be closed by a cover,
the box including a spacer wall (12) protruding from the outer face (6ₑ) of the bottom, and including a serrated end edge (14) having a series of teeth (16) delimiting together blocking housings (17) for the rods, the box being **characterized in that** the spacer wall (12) forms a continuous ring and **in that** the serrated end edge (14) extending at a distance from the bottom (6) such that the bottom (6) is not in contact with the reinforcement in a mounted position of the box on the reinforcement.

2. The reservation box according to claim 1, **characterized in that** the spacer wall (12) extends substantially parallel relative to the side wall (7) and set back relative to said side wall (7).

3. The reservation box according to claim 1 or 2, **characterized in that** the spacer wall (12) extends along a height comprised between 25 mm and 40 mm.

4. The reservation box according to any of claims 1 to 3, **characterized in that** the spacer wall (12) includes at least one passage opening as a device (20) for attaching the box to the reinforcement.

5. The reservation box according to any of claims 1 to 4, **characterized in that** the blocking housings (17) have a wedging profile converging in a direction opposite to the serrated end edge (14).

6. The reservation box according to any of claims 1 to 5, **characterized in that** the blocking housings (17) have a circular-arc-shaped bottom (17₁) whose diameter is comprised between 6 mm and 12 mm and preferably between 8 mm and 10 mm.

7. The reservation box according to any of claims 1 to 6, **characterized in that** the blocking housings (17) have a depth comprised between 4 mm and 15 mm and preferably between 8 mm and 12 mm.

8. The reservation box according to any of claims 1 to 7, **characterized in that** the blocking housings (17) delimit together teeth (16) of a width comprised between 1 mm and 3 mm.

9. The reservation box according to any of claims 1 to 8, **characterized in that** the blocking housings (17) are made at a regular spacing pitch corresponding to a multiple of the spacing pitch of the reinforcement (2).

10. The reservation box according to any of claims 1 to 9, **characterized in that** the bottom (6) of the box (1) has the shape of a quadrilateral and **in that** the spacer wall (12) is a ring in the shape of a quadrilateral.

11. The reservation box according to any of claims 1 to 10, **characterized in that** the blocking housings (17) of the spacer wall (12) have bottoms (17₁) that are spaced apart from the bottom (6) of the hollow body (5).
